(19) **Europäisches Patentamt**
**European Patent Office**
**Office européen des brevets**

(11) **EP 2 511 715 B1**

(12) **EUROPEAN PATENT SPECIFICATION**

(45) Date of publication and mention
of the grant of the patent:
**30.05.2018 Bulletin 2018/22**

(51) Int Cl.:
*G01R 21/00* (2006.01)          *G01R 22/00* (2006.01)
*H02J 13/00* (2006.01)          *H04Q 9/00* (2006.01)

(21) Application number: **10835688.2**

(22) Date of filing: **06.12.2010**

(86) International application number:
**PCT/JP2010/007089**

(87) International publication number:
**WO 2011/070762 (16.06.2011 Gazette 2011/24)**

(54) **POWER INFORMATION COLLECTION APPARATUS, POWER MEASUREMENT APPARATUS, POWER INFORMATION COLLECTION SYSTEM, AND POWER INFORMATION COLLECTION METHOD**

VORRICHTUNG ZUR SAMMLUNG VON LEISTUNGSINFORMATIONEN, LEISTUNGSMESSVORRICHTUNG, SYSTEM ZUR SAMMLUNG VON LEISTUNGSINFORMATIONEN UND VERFAHREN ZUR SAMMLUNG VON LEISTUNGSINFORMATIONEN

APPAREIL DE COLLECTE D'INFORMATIONS SUR LA PUISSANCE, APPAREIL DE MESURE DE LA PUISSANCE, SYSTÈME DE COLLECTE D'INFORMATIONS SUR LA PUISSANCE ET PROCÉDÉ DE COLLECTE D'INFORMATIONS SUR LA PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2009 JP 2009280934**

(43) Date of publication of application:
**17.10.2012 Bulletin 2012/42**

(73) Proprietor: **Panasonic Intellectual Property Management Co., Ltd.**
**Osaka-shi, Osaka 540-6207 (JP)**

(72) Inventors:
• **SAKAGUCHI, Keiji**
**Chuo-ku**
**Osaka-shi, Osaka 540-6207 (JP)**
• **MURAKAMI, Takashi**
**Chuo-ku,**
**Osaka-shi, Osaka 540-6207 (JP)**
• **TSUCHIDA, Shinichi**
**Chuo-ku,**
**Osaka-shi, Osaka 540-6207 (JP)**
• **NISHIYAMA, Hiromichi**
**Chuo-ku,**
**Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(56) References cited:
**WO-A2-2009/109755**     **CA-A1- 2 542 193**
**DE-A1- 10 008 185**     **JP-A- 10 282 161**
**JP-A- 2004 348 319**

## Description

[Technical Field]

The present invention relates to a power information collecting apparatus which collects power information including a power consumption level from each of a plurality of devices.

[Background Art]

A plurality of devices such as home appliances are used at the same time. When a total of power consumption of such devices (hereinafter called "total power consumption level") exceeds an upper limit of a usable power level (hereinafter called "maximum usable power level"), for example, a breaker trips, and power supply to the devices in operation is stopped. For some of such devices, for example, a microwave oven, a rice cooker, or a personal computer, it is not desirable to have the power turned OFF in operation.

Thus disclosed is a technique of detecting an operation status of each device in real time and controlling each device based on the detected operation status of each device such that the total power consumption level does not exceed the maximum usable power level (For example, see Patent Literature 1).

[Citation List]

[Patent Literature]

[PTL 1] Japanese Unexamined Patent Application Publication No. 2004-23283

[Summary of Invention]

[Technical Problem]

However, the technique described in Patent Literature 1 has a problem that: in case of delay in detecting the operation status of each device, a failure in appropriate control of the devices causes a total power consumption level to exceed the maximum usable power level.

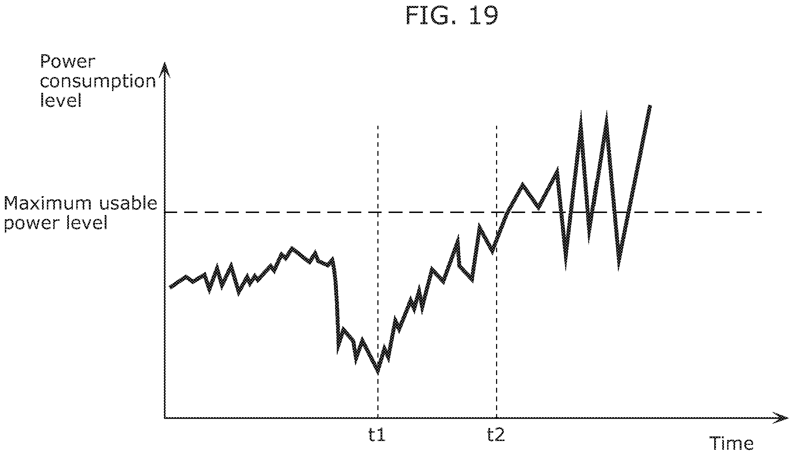

Fig. 19 is a diagram for describing the problem to be solved by the present invention. Specifically, Fig. 19 is a graph showing temporal change in total power consumption level.

Time t1 is time at which a device whose power consumption level is high starts operating. In addition, time t2 is time at which another device whose power consumption level is high starts operating. In Fig. 19, a delay in collecting the power information for detecting the change in operation status at time t2 delays execution of the control for suppressing the power consumption level on each device, so that the total power consumption level exceeds the maximum usable power level.

Such a delay in collecting the power information is more likely to occur as the number of devices increases. For example, when serially collecting the power information from a plurality of devices, a larger number of devices results in a lower frequency of collecting the power information from each device. Therefore, in case of a significant change in the power consumption of a certain device immediately after the information on the device is collected, there is a delay in the detection of the change. This results in a delay in the control for suppressing the power consumption level, so that the total power consumption level exceeds the maximum usable power level.

Thus, an object of the present invention which is conceived in view of the above problem is to provide a power information collecting apparatus or the like that is capable of efficiently collecting power information when collecting the power information including the power consumption level from a plurality of devices. CA 2 542 193 A1 discloses a power information collecting apparatus according to the preamble of claim 1.

[Solution to Problem]

To achieve the above object, a power information collecting apparatus according to an aspect of the present invention is a power information collecting apparatus according to claim 1.

Since this allows collecting the power information with a frequency according to the power change rate of each device, it is possible to efficiently collect, by giving priority, the power information of the device having a larger influence on the total power consumption level. In other words, it is possible to set a higher frequency of collecting the power information of the device having a larger influence on the total power consumption level than the frequency of collection for another device. This accordingly allows efficiently collecting the power information within a range not exceeding the capacity of the power information collecting apparatus (such as capacity of processing power information or communication capacity). In addition, when using the power information thus collected, it is possible to quickly detect the change in the total power consumption level, thus suppressing the total power consumption so as not to exceed the maximum usable power consumption level.

In addition, it is preferable that the change rate calculating unit calculate the power change rate for each of the devices, using last collected power information out of the power information held by the data holding unit.

Since this allows collecting the power information according to the latest power change rate, it is possible to efficiently collect the power information according to a current status.

In addition, it is preferable that the change rate calculating unit calculate, for each of the devices, a maximum power change rate as the power change rate, the maximum power change rate being a highest power change rate among power change rates for a plurality of periods.

Since this allows collecting the power information according to the maximum power change rate that occurs in each device, it is possible to efficiently collect the power information of a device which is likely to cause a significant change in the total power consumption level.

In addition, it is preferable that the change rate calculating unit calculate, for each of the devices, an average power change rate as the power change rate, the average power change rate being an average of power change rates for a plurality of periods.

This allows collecting the power information according to the averaged power change rate, thus allowing stably and efficiently collecting the power information.

In addition, it is preferable that the controller determine whether or not a total power consumption level that is a total of power consumption levels of the devices exceeds a first threshold, and control, when the total power consumption level exceeds the first threshold, the communication unit such that, for the devices, the frequency of collecting the power information by the communication unit is higher for the higher power change rate.

This allows control of the frequency of collecting the power information according to the power change rate only when the total power consumption level is likely to exceed the maximum usable power level. In other words, when the total power consumption level is less likely to exceed the maximum usable power level, it is not necessary to control the frequency of collecting the power information according to the power change rate, thus allowing reducing a processing load.

In addition, it is preferable that the first threshold be a value calculated by subtracting, from a maximum usable power level indicating an upper limit of the total power consumption level that is usable, a product of a maximum power change rate that is highest among the maximum power change rates of the devices and a predetermined time interval and that the maximum power change rate be a highest power change rate among power change rates for a plurality of periods.

Since this allows dynamically determining the first threshold according to the maximum power change rate, it is possible to dynamically determine whether or not the total power consumption level is likely to exceed the maximum usable power level. Then, when the total power consumption level is likely to exceed the maximum usable power level, it is possible to efficiently collect the power information of a device having a larger influence on the total power consumption level.

In addition, it is preferable that the controller control the communication unit such that the communication unit does not collect power information of a device having a maximum power change rate smaller than a second threshold, when the total power consumption level exceeds the first threshold.

Since this does not allow collecting the power information of a device having a smaller influence on the total power consumption level, even when the upper limit of collection capacity is reached, it is possible to collect the power information of the device having a larger influence on the total power consumption level without exceeding the upper limit of the collection capacity.

In addition, it is preferable that the maximum usable power level be a power level determined by a contract with a power company.

This allows efficiently collecting the power information when the total power consumption level is likely to exceed the power level in accordance with a contract with a power company.

In addition, it is preferable that the maximum usable power level be a level of an available power supply from power supply equipment that supplies power to the devices.

This allows efficiently collecting the power information when the total power consumption level is likely to exceed an upper limit of an available power supply from the power supply equipment.

In addition, it is preferable that the maximum usable power level be a total of a power level determined by a contract with a power company and a level of an available power supply from power supply equipment that supplies power to the devices.

This allows efficiently collecting the power information when the total power consumption level is likely to exceed a sum of the contract power level in accordance with the contract with the power company and the upper limit of the available power supply from the power supply equipment.

In addition, it is preferable that the maximum usable power level be a target maximum power consumption level that is determined by a user.

This allows efficiently collecting the power information when the total power consumption level is likely to exceed the target maximum power consumption level that is previously determined by the user.

In addition, it is preferable that the communication unit receive available power supply information including the level of the available power supply measured in the power supply equipment, and that the controller further calculate the maximum usable power level, using the available power supply information received by the communication unit, and control the communication unit according to the first threshold obtained from the maximum usable power level that is calculated.

This allows dynamically changing the maximum usable power level according to the change in the available power supply from the power supply equipment, thus allowing efficiently collecting the power information.

In addition, it is preferable that the controller further control the communication unit such that the frequency of collecting the available power supply information is higher for a higher change rate in the level of the available power supply.

This allows quickly reflecting, in the maximum usable power level, a change in the level of the available power supply.

In addition, it is preferable that the controller further control the devices, using the power information collected by the communication unit.

Since this allows control of the device using the power information collected according to the power change rate, it is possible to reduce the possibility of the total power consumption level exceeding the maximum usable power level.

In addition, a power measuring apparatus according to an aspect of the present invention is a power measuring apparatus which is connected to at least one device and transmits, to a power information collecting apparatus, power information including a power consumption level of the at least one device, and the power measuring apparatus includes: a power measuring unit which measures the power consumption level of the at least one device; a data holding unit which holds the power information including the power consumption level measured by the power measuring unit; a change rate calculating unit which calculates a power change rate, using the power information held by the data holding unit, the power change rate indicating a degree of increase and decrease in the power consumption level; a communication unit which transmits, to a power information collecting apparatus, the power information held by the data holding unit; and a controller which controls the communication unit such that a frequency of transmitting the power information is higher for a higher power change rate calculated by the change rate calculating unit.

This allows changing the frequency of transmitting the power information according to the power change rate, that is, a degree of influence on the total power consumption level. Accordingly, this allows another device which receives the power information from the power measuring apparatus to effectively collect the power information of the device having a larger influence on the total power consumption level by giving priority to the device.

In addition, it is preferable that the change rate calculating unit calculate the power change rate, using, out of the power information held by the data holding unit, power information indicating a power information level that is last measured.

Since this allows transmitting the power information according to the latest power change rate, it is possible to transmit the power information with a transmission frequency according to the current status.

In addition, it is preferable that the change rate calculating unit calculate, for each of the devices, a maximum power change rate as the power change rate, the maximum power change rate being a highest power change rate among power change rates for a plurality of periods.

Since this allows transmitting the power information according to the maximum power change rate that occurs in each device, it is possible to transmit, with higher frequency, the power information of a device which is likely to cause a significant change in the total power consumption level.

In addition, it is preferable that the change rate calculating unit calculate, for each of the devices, an average power change rate as the power change rate, the average power change rate being an average of power change rates for a plurality of periods.

Since this allows transmitting the power information according to the averaged power change rate, it is possible to stably change the frequency of transmission.

In addition, a power information collecting system according to an aspect of the present invention is defined by claim 9.

Since this allows collecting the power information with a frequency according to the power change rate of each device, it is possible to efficiently collect the power information of the device having a larger influence on the total power consumption level by giving priority to the device.

In addition, an integrated circuit according to an example not covered by the present invention is an integrated circuit for collecting, for each of a plurality of devices, power information including a power consumption level, and the integrated circuit includes: a communication unit which collects the power information for each of the devices; a data holding unit which holds the power information collected by the communication unit; a change rate calculating unit which calculates a power change rate for each of the devices, using the power information held by the data holding unit, the power change rate indicating a degree of increase and decrease in the power consumption level; and a controller which controls the communication unit such that, for the devices, a frequency of collecting the power information is higher for a higher power change rate calculated by the change rate calculating unit.

This allows producing the same advantageous effect as the power information collecting apparatus described above.

Note that the present invention can be realized not only as a power information collecting apparatus or power measuring apparatus but also as a power information collecting method which includes, as steps, operations of characteristic constituent elements included in the power information collecting apparatus. In addition, the present invention can be realized as a program for causing a computer to execute each of the steps included in the power information collecting system as described above. Moreover, it goes without saying that such a program can be distributed via a recording medium such as a compact disc read only memory (CD-ROM) or a transmission medium such as the Internet.

[Advantageous Effects of Invention]

According to the present invention, since it is possible to collect the power information with a frequency according to the power change rate of each device, it is possible to efficiently collect the power information of the device having a larger influence on the total power consumption level by giving priority to the device.

[Brief Description of Drawings]

[Fig. 1] Fig. 1 is a diagram showing an outline of a power information collecting system according to a first embodiment of the present invention.
[Fig. 2] Fig. 2 is a functional block diagram of a power information collecting apparatus according to the first embodiment of the present invention.
[Fig. 3] Fig. 3 is a functional block diagram of a power measuring apparatus according to the first embodiment of the present invention.
[Fig. 4] Fig. 4 is a flowchart showing a process performed by the power information collecting apparatus according to the first embodiment of the present invention.
[Fig. 5] Fig. 5 is a flowchart showing a process performed by the power measuring apparatus according to the first embodiment of the present invention.
[Fig. 6] Fig. 6 is an example of a sequence diagram showing an information flow in the power information collecting system according to the first embodiment of the present invention.
[Fig. 7] Fig. 7 is an example of a sequence diagram showing an information flow in the power information collecting system according to the first embodiment of the present invention.
[Fig. 8] Fig. 8 is a diagram showing another example of an outline of the power information collecting system according to the first embodiment of the present invention.
[Fig. 9] Fig. 9 is a functional block diagram of a power information collecting apparatus according to a second embodiment of the present invention.
[Fig. 10] Fig. 10 is a graph showing a temporal change in total power consumption level.
[Fig. 11] Fig. 11 is a flowchart showing a process performed by the power information collecting apparatus according to the second embodiment of the present invention.
[Fig. 12A] Fig. 12A is a sequence diagram showing an example of an information flow in the power information collecting system according to the second embodiment of the present invention.
[Fig. 12B] Fig. 12B is a sequence diagram showing another example of an information flow in the power information collecting system according to the second embodiment of the present invention.
[Fig. 13] Fig. 13 is a graph showing temporal change in total power consumption level.
[Fig. 14] Fig. 14 is a functional block diagram of a power information collecting apparatus according to a third embodiment of the present invention.
[Fig. 15] Fig. 15 is a flowchart showing a process performed by the power information collecting apparatus according to the third embodiment of the present invention.
[Fig. 16] Fig. 16 is a functional block diagram of a power measuring apparatus according to a fourth embodiment of the present invention.
[Fig. 17] Fig. 17 is a flowchart showing a process performed by the power measuring apparatus according to the fourth embodiment of the present invention.
[Fig. 18] Fig. 18 is a diagram showing an example of a hardware configuration of a computer.
[Fig. 19] Fig. 19 is a diagram for describing the problem to be solved by the present invention.

[Description of Embodiments]

Hereinafter, embodiments of the present invention will be described with reference to the drawings.

[Embodiment 1]

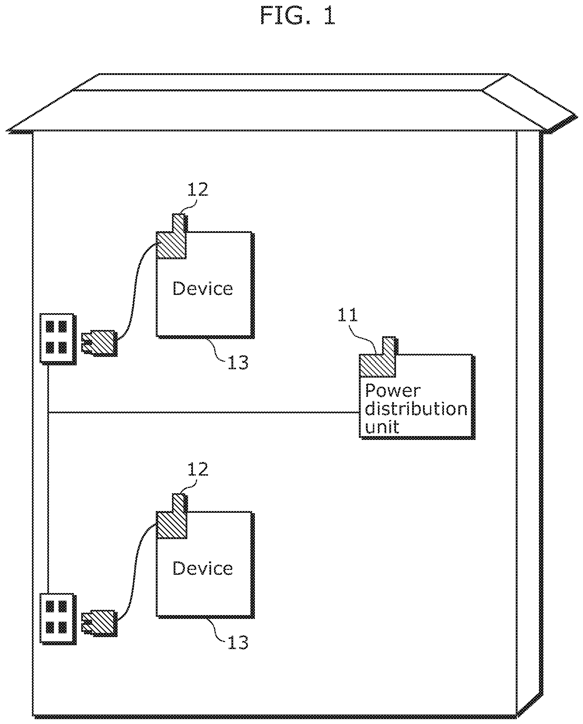

Fig. 1 is a diagram showing an outline of a power information collecting system according to a first embodiment of the present invention. The power information collecting system includes a power information collecting apparatus 11 and a power measuring apparatus 12. In addition, the power information collecting apparatus 11 and the power measuring apparatus 12 are connected to each other via a wireless or wired network.
The power information collecting apparatus 11 collects power information including a power consumption level from each of a plurality of devices 13. Specifically, the power information collecting apparatus 11 is an apparatus which collects power information so as to control the devices 13. The power information collecting apparatus 11 is attached to, for example, a power distribution unit that allocates a power supply to the devices 13.
The power measuring apparatus 12 measures a power consumption level of each of the devices 13 connected thereto, and transmits power information including the measured power consumption level to the power information collecting apparatus 11. For example, the power measuring apparatus 12 is connected to the devices 13 via a serial interface such as a universal serial bus (USB).
The devices 13 consume electric power. Specifically, the devices 13 are, for example, lighting equipment, an air conditioner, a television set, a refrigerator freezer, a microwave oven, or a personal computer (PC).
In addition, it is preferable that each device 13 be a device capable of receiving and transmitting information by wireless communication such as ZigBee or a wireless local area network (LAN), or wired communication such as Ethernet (trademark). Particularly, it is preferable that the devices 13 be what are called "digital appliances" which allow remote control of power ON/OFF, switching between various operation modes, and so on.

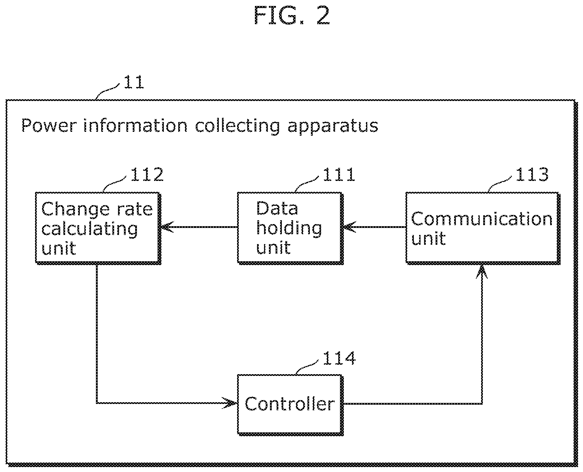

Next, the details of a functional configuration of the power information collecting apparatus 11 and the power measuring apparatus 12 will be described with reference to the drawings. First, the power information collecting apparatus 11 is described with reference to Fig. 2.

Fig. 2 is a functional block diagram of a power information collecting apparatus according to the first embodiment of the present invention. As shown in Fig. 2, the power information collecting apparatus 11 includes: a data holding unit 111, a change rate calculating unit 112, a communication unit 113, and a controller 114.

The data holding unit 111 holds the power information collected by the communication unit 113.

The change rate calculating unit 112 reads the power information held by the data holding unit 111, and calculates, for each device 13, using the read power information, a power change rate indicating a degree of increase in the power consumption level. Specifically, the change rate calculating unit 112 calculates a power change rate P as shown in Expression (1), using, out of the power information held by the data holding unit 111, power information that is last collected.

[Math 1]

$$ P = \frac{W_1 - W_2}{T} \qquad \cdots (1) $$

Here, W1 is a power consumption level measured at time 1. Note that in the present embodiment, W1 is a power consumption level that is last measured. Here, W2 is a power consumption level measured at time 2 preceding time 1 by a predetermined length of time. In addition, T is a period from time 2 to time 1.

The communication unit 113 collects power information for each device 13. Specifically, the communication unit 113 receives the power information of each device 13 from each power measuring apparatus 12 via a wireless or wired network. The power information includes: the power consumption level of each device 13, and the time at which the consumption level is measured. Note that the power information may include: an integrated power consumption level of the device 13 or an operation status (power ON, power OFF, or the like) of the device 13. The time may be a relative time.

The controller 114 controls the communication unit 113 such that the frequency of collecting power information is higher for a device 13 having a higher power change rate calculated by the change rate calculating unit 112. In other words, the controller 114 determines, for each device 13, the frequency of collecting the power information such that the frequency of collection is higher for a device having a larger degree of increase in the power consumption level. Then, the controller 114 causes the communication unit 113 to collect power information from the power measuring apparatus 12 connected to each device 13, according to the collection frequency determined for each device 13.

Specifically, the controller 114 collects the power information of each device 13 by, for example, transmitting, to each power measuring device 12, a power information request command that requests to transmit power information according to the collection frequency determined for each device 13 (polling method). In addition, for example, the controller 114 collects the power information of each device 13 by, for example, transmitting, to each power measuring apparatus 12, a time allocation command for allocating a time slot to each power measuring apparatus 12 according to the determined collection frequency (time division multiple access (TDMA) method).

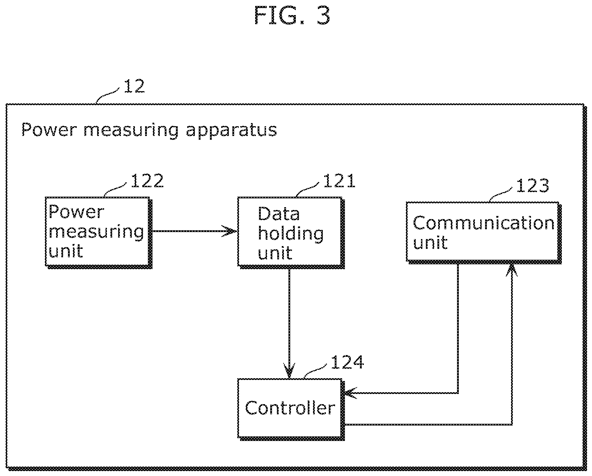

The following describes the power measuring apparatus 12 with reference to Fig. 3.

Fig. 3 is a functional block diagram of a power measuring apparatus according to the first embodiment of the present invention. As shown in Fig. 3, the power measuring apparatus 12 includes: a data holding unit 121, a power measuring unit 122, a communication unit 123, and a controller 124.

The data holding unit 121 holds power information including the power consumption level measured by the power measuring unit 122.

The power measuring unit 122 measures the power consumption level of the device 13 connected thereto. Note that the power measuring unit 122 may measure an integrated power consumption level of the device 13 connected thereto. In addition, the power measuring unit 122 may obtain the operation status of the device 13 connected thereto.

The communication unit 123 transmits the power information to the power information collecting apparatus 11. Specifically, the communication unit 113 transmits, according to the collection frequency determined by the power information collecting apparatus 11, the power information held by the data holding unit 121 to the power information collecting apparatus 11 via the wireless or wired network. In addition, the communication unit 123 receives various commands from the power information collecting apparatus 11. These various commands include a command related to the frequency of collecting the power information. Specifically, such various commands include, for example, the power information request command.

The controller 124 transmits, according to the command received by the communication unit 123 from the power information collecting apparatus 11, the power information held by the data holding unit 121 via the communication unit 123.

The following describes each operation in the power information collecting system thus configured.

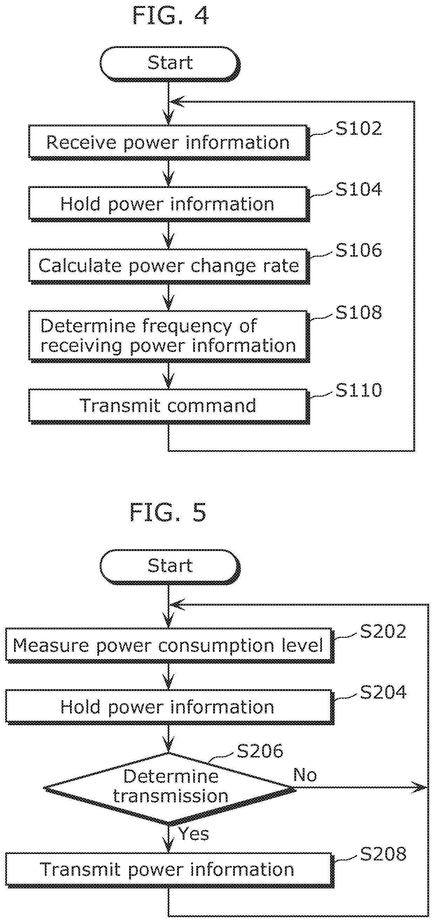

Fig. 4 is a flowchart showing a process performed by the power information collecting apparatus according to the first embodiment of the present invention.

First, the communication unit 113 receives power information from the power measuring apparatus 12 (S102). Subsequently, the data holding unit 111 holds the power information that is received (S104). Next, the change rate calculating unit 112 reads the power information held by the data holding unit 111 and calculates the power change rate for each device 13 using the power information that is read (S106).

Subsequently, the controller 114 determines, for each device 13, the frequency of collecting power information such that a device 13 having a higher power collection rate has a higher collection frequency (S108). Then, the controller 114 transmits, according to the collection frequency that is determined, the power information request command to each power measuring apparatus 12 via the communication unit 113 (S110).

Thus, the power information collecting apparatus 11 collects the power information of each device 13 at each time, by repeatedly performing the processing from steps S102 through S110.

Fig. 5 is a flowchart showing a process performed by the power measuring apparatus according to the first embodiment of the present invention.

First, the power measuring unit 122 measures the power consumption level of the device 13 connected thereto (S202). Specifically, the power measuring unit 122 measures the power consumption level of the connected device 13, for example, at predetermined time intervals. Note that the power measuring unit 112 may measure the power consumption level of the device 13 by dynamically changing the time intervals according to the power consumption level that is measured.

Next, the data holding unit 121 holds the power information including the power consumption level that is measured (S204). Subsequently, the controller 124 determines whether or not to transmit the power information to the power information collecting apparatus 11 (S206). For example, in the case of transmitting the power information by the polling method, the controller 124 determines that the power information is to be transmitted to the power information collecting apparatus 11, when the controller 124 has received the power information request command from the power information collecting apparatus 11 but has not yet transmitted the power information in response to the received power information request command.

Here, when it is determined to transmit the power information (Yes in S206), the communication unit 123 transmits the power information held by the data holding unit 121 (S208). Then, the power measuring apparatus 12 repeats the processing from step S202. On the other hand, when it is determined not to transmit the power information (No in S206), the power measuring apparatus 12 repeats the processing from step S202.

Thus, the power measuring apparatus 12 repeatedly transmits the power information to the power information collecting apparatus 11 by repeatedly performing the processing from steps S202 through S208.

The following describes a flow of information transmitted or received in the power information collecting system.

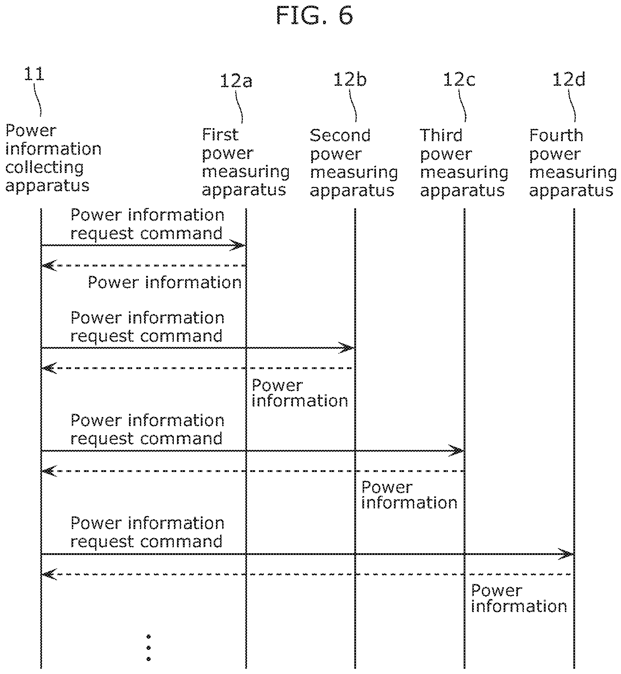

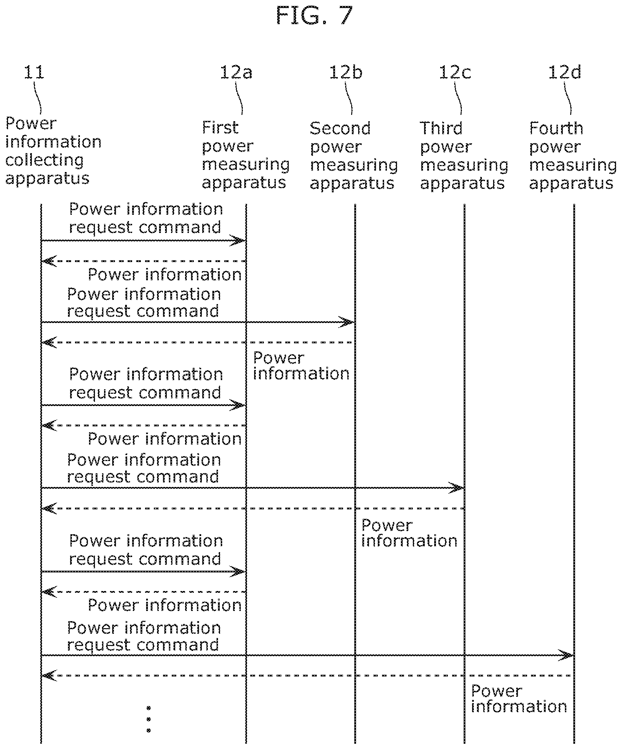

Each of Figs. 6 and 7 is an example of a sequence diagram showing a flow of the information in the power information collecting system according to the first embodiment of the present invention.

Specifically, Fig. 6 is a sequence diagram when the power change rates of the first to the fourth devices connected to the first to the fourth power measuring apparatuses 12a to 12d are approximately equal. In addition, Fig. 7 is a sequence diagram when the power change rate of the first device connected to the first power measuring device 12a is higher than the power change rates of the second to the fourth devices connected to the second to the fourth power measuring apparatuses 12b to 12d. Here, that the power change rates are approximately equal is that the power change rates have minor differences and thus can be regarded as equal.

Note that in Figs. 6 and 7, the case of providing four power measuring apparatuses 12 is described, but the number of the power measuring apparatuses 12 need not necessarily be four.

As shown in Fig. 6, when the power change rates of the respective devices are approximately equal, the power information collecting apparatus 11 transmits, with the same frequency, the power information request command to each of the first to the fourth power measuring apparatuses 12a to 12d. As a result, the power information collecting apparatus 11 can receive the power information from each power measuring apparatus with the same frequency.

On the other hand, as shown in Fig. 7, when the power change rate of the first device is higher than the power change rate of the other devices, the power information collecting apparatus 11 transmits the power information request command to the first power measuring apparatus 12a, with a higher frequency than the frequencies of transmitting the command to the second to the fourth power measuring apparatuses 12b to 12d. As a result, the power information collecting apparatus 11 can receive power information from the first power measuring apparatus 12a with a higher frequency than the frequencies of receiving the power information from the second to the fourth power measuring apparatuses 12b to 12d.

As described above, the power information collecting apparatus 11 according to the present embodiment can collect the power information with a frequency according to the power change rate of each device 13, and thus can efficiently collect the power information of a device 13 having a larger influence on the total power consumption level by giving priority to the device. In other words, it is possible to set a higher frequency of collecting the power information of the device having a larger influence on the total power consumption level than the collection frequencies of the other devices. This accordingly allows the power information collecting apparatus 11 to efficiently collect the power information within a range not exceeding the capacity of the power information collecting apparatus (such as capacity of processing power information or communication capacity). In addition, when using the power information thus collected, it is possible to quickly detect the change in the total power consumption level, thus suppressing the total power consumption so as not to exceed the maximum usable power consumption level.

In addition, this allows the power information collecting apparatus 11 to collect the power information according to the latest power change rate, thus allowing efficiently collecting the power information according to the current status.

Note that when it is not possible to increase the collection frequency in total due to constraints of the power information collecting apparatus 11 such as collection capacity, the frequency of collecting the power information from the first power measuring apparatus may be increased by lowering the frequencies of collecting the power information from the second to the fourth power measuring apparatuses. This allows efficiently collecting the power information of a device having a larger influence on the total power consumption level by giving priority to the device, without increasing the collection frequency in total.

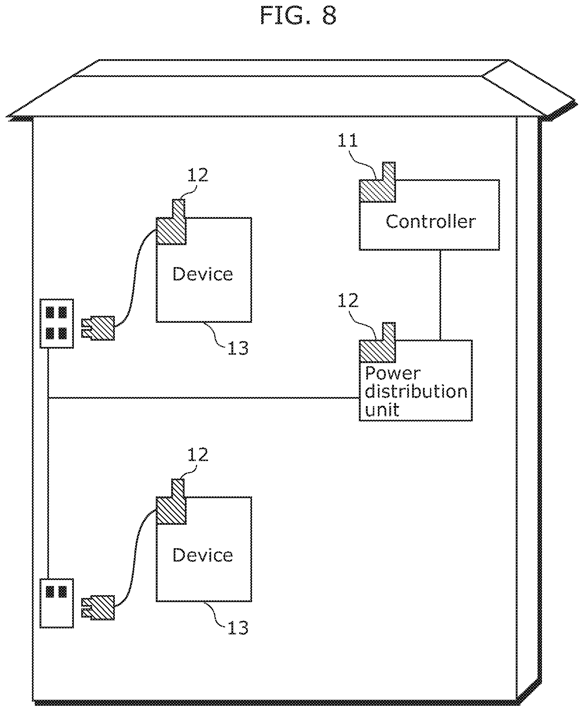

In addition, the power information collecting apparatus 11 need not necessarily be attached to the power distribution unit. For example, as shown in Fig. 8, the power information collecting apparatus 11 may be attached to a controller which controls the devices 13. Furthermore, the power information collecting apparatus 11 may receive information related to the power supplied from the power distribution unit from the power measuring apparatus 12 attached to the power distribution unit.

(Variation 1 of Embodiment 1)

As a first variation of the first embodiment, the following describes an example of controlling the frequency of collecting power information, using a power change rate different from the power change rate according to the first embodiment.

The power information collecting apparatus 11 according to the present variation controls the frequency of collecting the power information, according to a maximum power change rate of each device 13.

The change rate calculating unit 112 calculates the maximum power change rate using the power information held by the data holding unit 111. The maximum power change rate is a highest power change rate among power change rates for a plurality of periods. In other words, the maximum power change rate is the highest power change rate of the plurality of power change rates of different periods, which are calculated according to Expression (1).

Specifically, the change rate calculating unit 112 reads the power information held by the data holding unit 111. Then, the change rate calculating unit 112 calculates, for each device 13, the power change rates of the periods according to Expression (1), using the power information that is read. The change rate calculating unit 112 calculates, as the maximum power change rate for each device 13, the highest power change rate among the power change rates thus calculated.

Note that the change rate calculating unit 112 may calculate, each time power information is collected, the power change rate for a period related to the collected power information, and update, with a newly calculated power change rate, the power change rate that is already held, when the calculated power change rate is higher than the power change rate that is held. This allows the change rate calculating unit 112 to obtain the maximum power change rate by referring to the power change rate that is held.

The controller 114 controls the communication unit 113 such that the frequency of collecting power information is higher for a device 13 having a higher maximum power change rate calculated by the change rate calculating unit 112.

As described above, the power information collecting apparatus 11 according to the present variation can determine the frequency of collecting the power information according to the maximum power change rate in each device 13, thus allowing efficiently collecting the power information of a device which is likely to cause a significant increase in the total power consumption level.

(Variation 2 of Embodiment 1)

As a second variation of the first embodiment, the following will describe another example of controlling the frequency of collecting power information using a power change rate that is different from the power change rate according to the first embodiment.

The power information collecting apparatus 11 according to the present variation controls the frequency of collecting the power information, using an average power change rate of each device 13.

The change rate calculating unit 112 calculates the average power change rate using the power information held by the data holding unit 111. Here, the average power change rate is an average of the power change rates for a plurality of periods. An average power change rate Pave is calculated according to Expression (2).

[Math 2]

$$P_{ave} = \frac{1}{n} \sum P \qquad \cdots (2)$$

Here, n is the number of power change rates P for the respective periods which are calculated according to Expression (1).

Specifically, the change rate calculating unit 112 reads the power information held by the data holding unit 111. Then, the change rate calculating unit 112 calculates, for each device 13, the power change rates of the respective periods according to Expression (1), using the power information that is read. The change rate calculating unit 112 calculates, for each device 13, an average of the power change rates thus calculated, as the average power change rate.

The controller 114 controls the communication unit 113 such that the frequency of collecting power information is higher for a device 13 having a higher average power change rate calculated by the change rate calculating unit 112.

As described above, the power information collecting apparatus 11 according to the present variation can collect the power information with a frequency according to the averaged power change rate, thus allowing stably and efficiently collecting the power information.

[Embodiment 2]

Next, a second embodiment of the present invention will be described with reference to the drawings.

A power information collecting apparatus 21 according to the present embodiment is different from the power information collecting apparatus 11 according to the first embodiment in that: the communication unit 113 is controlled such that the frequency of collecting the power information is higher for a device 13 having a higher power change rate when the total power consumption level exceeds the first threshold. Note that the power measuring apparatus according to the present embodiment is the same as the power measuring apparatus according to the first embodiment, and therefore the description and illustration thereof is omitted.

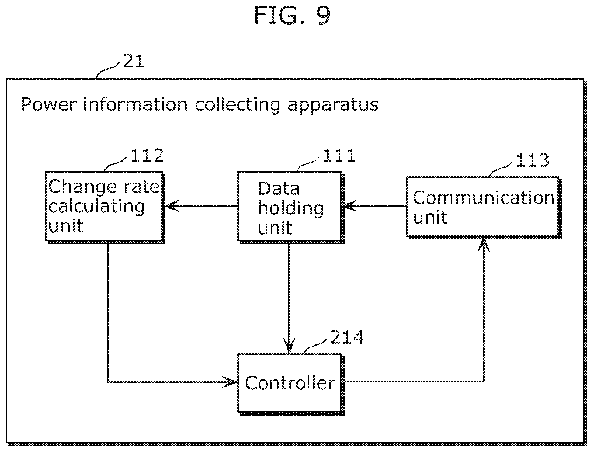

Fig. 9 is a functional block diagram of a power information collecting apparatus according to the second embodiment of the present invention. In Fig. 9, the same constituent elements as those in Fig. 2 are assigned with the same reference signs, and the descriptions thereof are omitted.

As shown in Fig. 9, the power information collecting apparatus 21 includes: a data holding unit 111, a change rate calculating unit 112, a communication unit 113, and a controller 214.

The controller 214 determines whether or not the total power consumption level exceeds the first threshold. Then, when the total power consumption level exceeds the first threshold, the controller 214 controls the communication unit 113 such that the frequency of collecting the power information is higher for the device having a higher power change rate. In other words, only when the total power consumption level exceeds the first threshold, out of the cases where the total power consumption level exceeds the first threshold and where the total power consumption level does not exceed the first threshold, the controller 214 controls the communication unit 113 such that the frequency of collecting the power information is higher for the device 13 having a higher power change rate.

Here, the total power consumption level is a total of the power consumed by the devices 13. In addition, the first threshold is a value calculated by subtracting, from the maximum usable power level indicating an upper limit of the total power consumption level that is available, a product of a maximum power change rate that is largest among the maximum power change rates of the respective devices 13 and a predetermined time interval. In addition, the maximum usable power level is a predetermined power level that is, for example, an allowable power level of a breaker provided in the power distribution unit or the like, an upper limit of a power supply specified by a contract with a power company, or a power level in case of change in electric charge that is based on the contract with the power company.

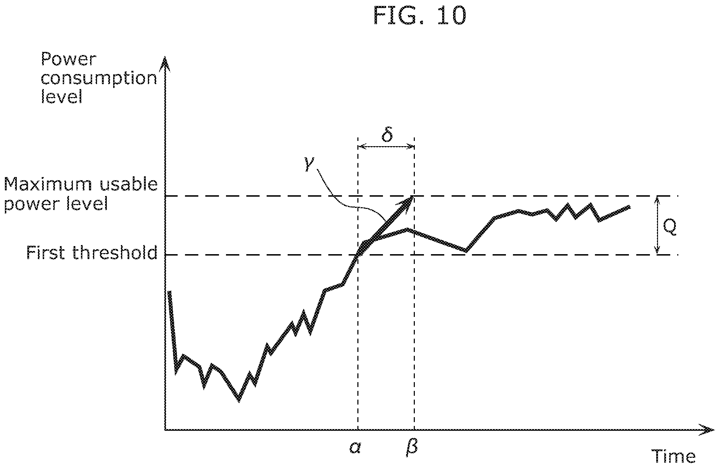

Fig. 10 is a graph showing a temporal change in total power consumption level. In Fig. 10, a vertical axis indicates a power consumption level, and a horizontal axis indicates time.

As shown in Fig. 10, the first threshold is a value calculated by subtracting, from the maximum usable power level, a maximum power change amount Q at time $\alpha$. At time $\alpha$, since the total power consumption level exceeds the first threshold, the controller 214 controls the communication unit 113 such that the frequency of collecting the power information is higher for the device 13 having a higher power change rate. In other words, assuming that the total power consumption level hovers at a maximum power change rate $\gamma$, when it is estimated that the total power consumption level exceeds the maximum usable power level when a predetermined time interval $\delta$ elapses (time $\beta$), the controller 214 controls the communication unit 113 such that the frequency of collecting the power information is higher for the device 13 having a higher power change rate. This is because the total power consumption level has a high possibility of exceeding the maximum usable power level when the total power consumption level exceeds the first threshold.

Note that the maximum power change amount Q is a product of the maximum power change rate $\gamma$ at time $\alpha$ and the predetermined time interval $\delta$. In addition, the maximum power change rate $\gamma$ is a maximum power change rate that is largest among the maximum power change rates of the respective devices 13. In addition, the predetermined time interval $\delta$ is, for example, an arbitrary time interval such as 60 seconds, or a time interval determined according to polling intervals.

The following describes each operation in the power information collecting system 21 thus configured.

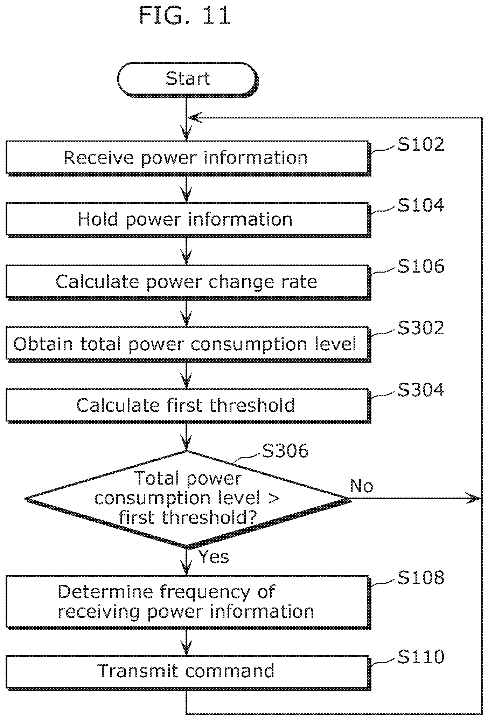

Fig. 11 is a flowchart showing a process performed by the power information collecting apparatus according to the second embodiment of the present invention. Note that in Fig. 11, the same constituent elements as those in Fig. 4 are assigned with the same reference signs, and the descriptions thereof are omitted.

After the change rate is calculated, the controller 214 obtains the total power consumption level (S302).

Specifically, for example, the controller 214 obtains the total power consumption level by calculating a total of the latest power consumption levels of the respective devices 13 which are held by the data holding unit 111. In addition, for example, the controller 214 may obtain the total power consumption level by obtaining a power supply from the power measuring apparatus attached to the power distribution unit.

Subsequently, the controller 214 calculates the first threshold (S304). Specifically, the controller 214 calculates the first threshold by subtracting, from the maximum usable power level, a product of the maximum power change rate that is largest among the maximum power change rates of the respective devices 13 and a predetermined time interval.

The controller 214 determines whether or not the total power consumption level exceeds the first threshold (S306). Here, when the total power consumption level exceeds the first threshold (Yes in S306), the power information collecting apparatus 21 performs the processing from step S108 onwards. On the other hand, when the total power consumption level does not exceed the first threshold (No in 306), the power information collecting apparatus 21 performs the processing in step S102.

Note that when the total power consumption level does not exceed the first threshold, for example, the controller 214 may control the communication unit 113 such that the communication unit 113 receives the power information with a predetermined collection frequency.

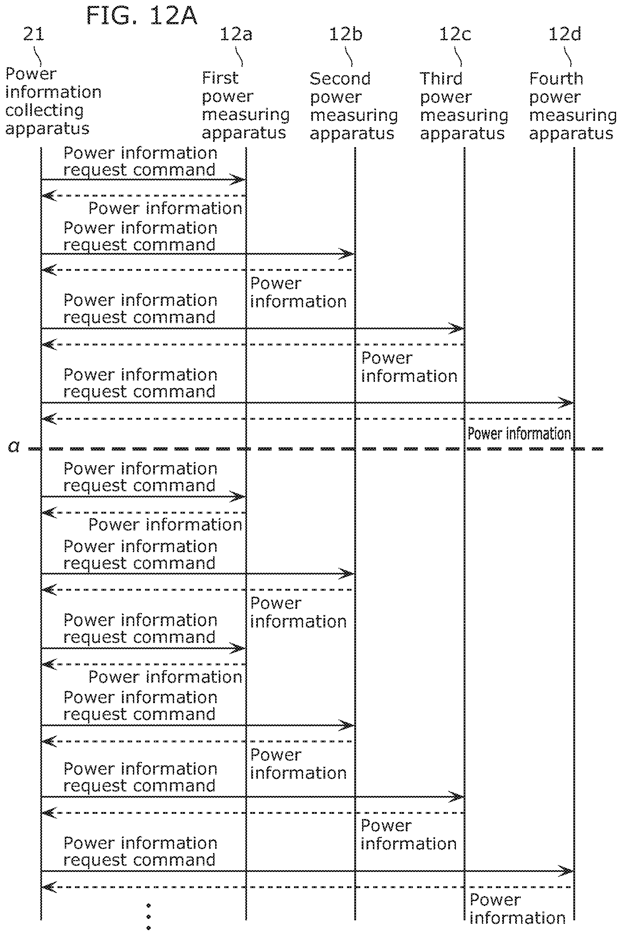

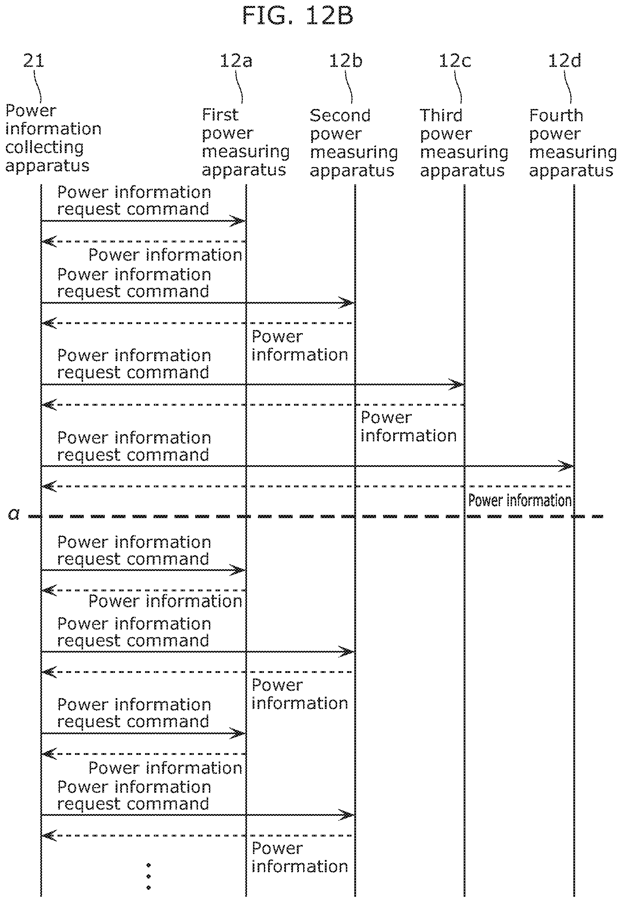

Fig. 12A is a sequence diagram showing an example of an information flow in the power information collecting system according to the second embodiment of the present invention. Specifically, Fig. 12 is a sequence diagram when the power change rates of the first and second devices connected to the first and second power measuring apparatuses 12a and 12b are higher than the power change rates of the third and fourth devices connected to the third and fourth power measuring apparatuses 12c and 12d.

Note that in Fig. 12A, the power change rates of the first and second devices are approximately equal, and the power change rates of the third and fourth devices are approximately equal.

As shown in Fig. 12, before time $\alpha$, the power information collecting apparatus 21 transmits, to each of the first to the fourth power measuring apparatuses 12a to 12d, the power information request command with the same frequency, irrespective of the power change rate of each device.

In contrast, after time $\alpha$, since the total power consumption level exceeds the first threshold, the power information collecting apparatus 21 transmits the power information request command to the first and second power measuring apparatuses 12a and 12b with a higher frequency than the frequency of transmitting the power information request command to the third and fourth power measuring apparatuses 12c and 12d.

Note that the power information collecting apparatus 21 need not necessarily transmit the power information request command to the third and fourth devices when the total power consumption level exceeds the first threshold. For example, when not having sufficient capacity for collecting power information, the power information collecting apparatus 21 need not transmit the power information request command to the third and fourth devices as shown in Fig. 12B. Specifically, when the maximum power change rates of the third and fourth devices are smaller than a second threshold, the power information collecting apparatus 21 need not transmit the power information request command to the third and fourth power measuring apparatuses 12c and 12d. With this, even when the power information collecting apparatus 21 reaches an upper limit of the collection capacity, the power information collecting apparatus 21 can collect the power information of the first and the second devices having larger influences on the total power consumption level. As the second threshold, for example, a value having a constant ratio with respect to the maximum usable power level may be used.

As described above, since the first threshold is dynamically calculated according to the maximum power rate, the power information collecting apparatus 21 according to the present embodiment can dynamically determine whether or not the total power consumption level is likely to exceed the maximum usable power level. Then, when the total power consumption level is likely to exceed the maximum usable power level, it is possible to efficiently collect the power information of a device having a larger influence on the total power consumption level.

(Variation 2 of Embodiment 2)

As a variation of the second embodiment, the following will describe the case of the maximum usable power level dynamically changing according to a power supply available from power supply equipment which supplies power to the devices 13. Note that the power supply equipment includes, for example, a power conditioner for photovoltaic power generation, a fuel cell, or a storage battery which is installed in a building in which the devices 13 are used.

The communication unit 113 included in the power information collecting apparatus 21 according to the present variation receives the available power supply information including an upper limit of the available power supply from the power supply equipment. For example, the communication unit 113 receives, from each power supply device, the available power supply information including a level of the power generated by a photovoltaic generation panel or a fuel cell, or a level of the power stored in the storage battery. Then, the controller 214 calculates, as the maximum usable power level, the total of the upper limits of the available power supply that are received from the respective power supply devices. The controller 214 calculates the first threshold, using the maximum usable power level thus calculated. Then, the controller 214 controls the frequency of collecting the power information, using the first threshold thus calculated.

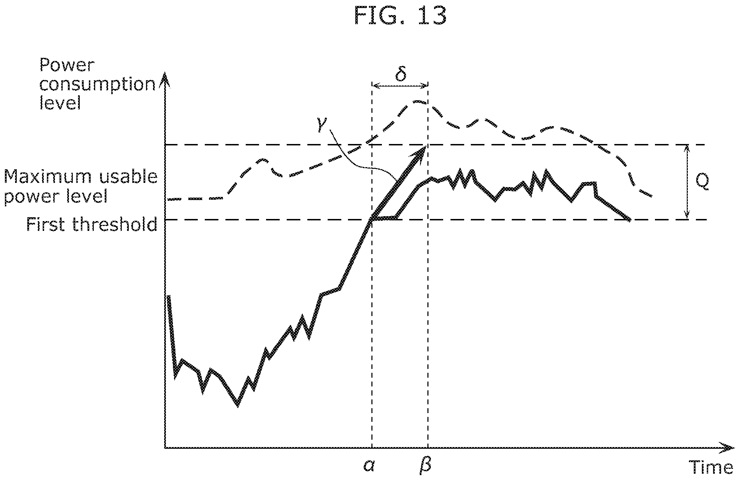

Fig. 13 is a graph showing a temporal change in total power consumption level. In Fig. 13, a vertical axis indicates a power consumption level, and a horizontal axis indicates time.

As shown in Fig. 13, since the level of available power supply fluctuates depending on each power supply device, the maximum usable power level also fluctuates with time. Note that the first threshold is a value calculated by subtracting the maximum power change amount Q from the maximum usable power level at time $\alpha$. The maximum usable power level at time $\alpha$ is a total of available power supply levels from the power supply equipment.

As described above, the power information collecting apparatus 21 according to the present variation can dynamically change the first threshold according to change in the level of the power supply available from the power supply equipment.

Note that in the present variation, the maximum usable power level has been described as a total of the levels of power supply available from the power supply equipment, but may be a sum of a total of the level of the power supply available from the power supply equipment and a power level specified by the contract with the power company. In addition, the maximum usable power level may be a target maximum power consumption level that is previously determined by the user.

In addition, in the present variation, it is preferable that the controller 214 control the communication unit 113 such that the frequency of collecting the available power supply information is higher for a higher change rate of the available power supply. This allows the power information collecting apparatus 21 to quickly reflect, in the maximum usable power level, a change in the level of available power supply.

[Embodiment 3]

Next, a third embodiment of the present invention will be described with reference to the drawings.

A power information collecting apparatus 31 according to the present embodiment is further characterized in controlling the operation statuses of the devices 13, using the collected power information.

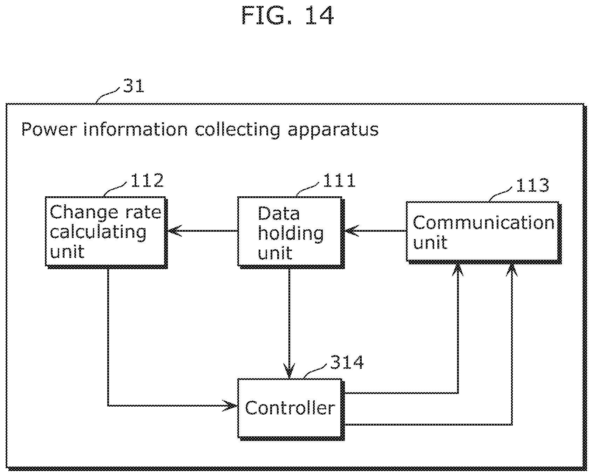

Fig. 14 is a functional block diagram of a power information collecting apparatus according to the third embodiment of the present invention. In Fig. 14, the same constituent elements as those in Fig. 2 are assigned with the same reference signs, and the descriptions thereof are omitted.

The power information collecting apparatus 31 according to the present embodiment includes: a data holding unit 111, a change rate calculating unit 112, a communication unit 113, and a controller 314.

In addition to the processing performed by the controller 114 in the first embodiment, the controller 314 controls the devices 13 using the power information received by the communication unit 113. Specifically, when, for example, the total power consumption level exceeds the predetermined level, the controller 314 transmits, to a device 13 having a lower priority, a power control command that requests to suppress the power consumption level. Then, the device 13 having received the power control command suppresses the power consumption by switching between various operation modes, or the like.

Note that the devices 13 should preferably be what are called "digital appliances" which allow remote control of power ON/OFF, switching of various operation statuses, and so on.

Next, the following describes each operation in the power information collecting system 31 thus configured.

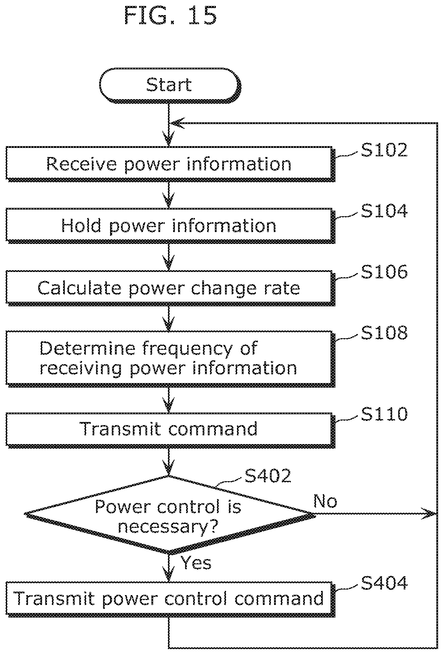

Fig. 15 is a flowchart showing a process performed by the power information collecting apparatus according to the third embodiment of the present invention. Note that in Fig. 15, the same constituent elements as those in Fig. 4 are assigned with the same reference signs, and the descriptions thereof are omitted.

After the power information request command is transmitted, the controller 314 determines whether or not power control is necessary (S402). Specifically, the controller 314 determines whether or not it is necessary to suppress the power consumption level of at least one of the devices 13.

More specifically, the controller 314, for example, determines whether or not power control is necessary, based on, for example, whether or not the total power consumption level exceeds a predetermined value. For the predetermined value, for example, any value is applicable as long as the value is calculated by multiplying the maximum usable power level by a coefficient below 1.

Here, when it is determined that power control is not necessary (No in S402), the power information collecting apparatus 31 repeats the processing from step S102 again.

In contrast, when it is determined that power control is necessary (Yes in S402), the controller 314 transmits the power control command that is a command related to power control, to at least one of the devices 13 via the communication unit 113. Specifically, the controller 314 transmits, for example, the power control command to decrease the power consumption level, to a predetermined device 13 having a lower priority. Then, the power information collecting apparatus 31 repeats the processing from step S102 again.

As described above, since the power information collecting apparatus 31 according to the present embodiment is capable of controlling the devices 13 using the power information collected with a frequency according to the power change rate, it is possible to reduce the possibility of the total power consumption level exceeding the maximum usable power level. In other words, the power information collecting apparatus 31 is able to use the power information that is efficiently collected, thus allowing controlling the devices 13 while quickly following the current status.

Furthermore, the power information collecting apparatus 31 is able to control the devices 13 using the actual collected power consumption instead of the rated power, thus allowing efficient use of available power.

Note that the power information collecting apparatus 31 may control the devices 13 via a power measuring apparatus connected to each device 13, instead of directly controlling the device 13. When the power information collecting apparatus 31 directly controls the device 13, the communication unit 113 has a function to communicate with the device 13 in addition to the function to communicate with the power measuring apparatus.

On the other hand, when the power information collecting apparatus 31 controls the device 13 via the power measuring apparatus connected to the device 13, the communication unit 113 need not have a function to communicate with the device 13 in addition to the function to communicate with the power measuring apparatus. In this case, the power measuring apparatus connected to the device 13 includes a device controller, receives the power control command from the power information collecting apparatus 31, and notifies a control command to the device 13 that is connected.

[Embodiment 4]

Next, a fourth embodiment of the present invention will be described with reference to the drawings.

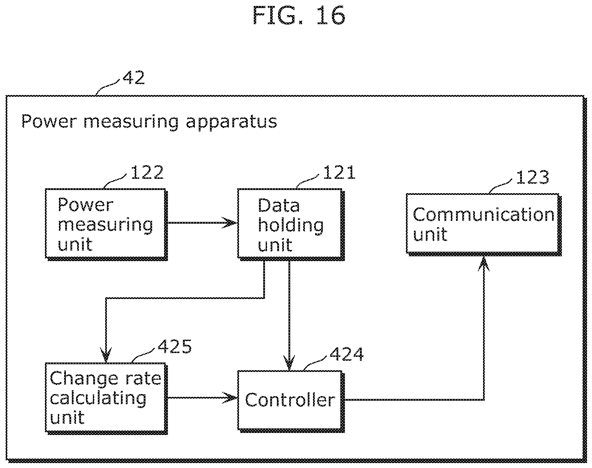

Fig. 16 is a functional block diagram of a power information collecting apparatus according to the fourth embodiment of the present invention. In Fig. 16, the same constituent elements as those in Fig. 3 are assigned with the same reference signs, and the descriptions thereof are omitted.

A power measuring apparatus 42 according to the present embodiment includes: a data holding unit 121, a power measuring unit 122, a communication unit 123, a controller 424, and a change rate calculating unit 425.

The controller 424 controls the communication unit 123 such that the frequency of transmitting power information is higher for a higher power change rate calculated by the change rate calculating unit 425.

The change rate calculating unit 425 reads the power information held by the data holing unit 121 and calculates the change rate of the power consumption level, using the power information that is read. Specifically, the change rate calculating unit 425 calculates the power change rate P as shown in Expression (1), using, out of the power information held by the data holding unit 121, the power information that is last measured.

Note that the change rate calculating unit 425 may calculate the maximum power change rate as the power change rate. In addition, the change rate calculating unit 425 may calculate the average power change rate as the power change rate.

Next, the following describes each operation in the power measuring apparatus 42 thus configured.

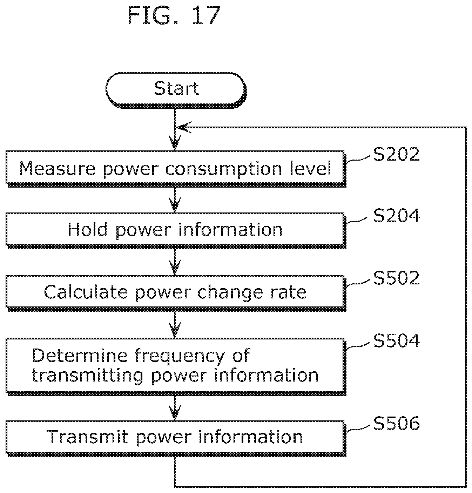

Fig. 17 is a flowchart showing a process performed by the power measuring apparatus according to the fourth embodiment of the present invention. Note that in Fig. 17, the same constituent elements as those in Fig. 5 are assigned with the same reference signs, and the descriptions thereof are omitted.

The change rate calculating unit 425 reads the power information held by the data holing unit 121 and calculates the power change rate that is a change rate in the power consumption level, using the power information that is read (S502). Subsequently, the controller 424 determines the frequency of transmitting the power information such that the transmission frequency is higher for a higher power change rate that is calculated by the change rate calculating unit 425 (S504). Then, the controller 424 transmits the power information to the power information collecting apparatus via the communication unit 123, according to the transmission frequency that is determined (S506).

Thus, the power measuring apparatus 42 transmits the measured power information to the power information collecting apparatus or the like, by repeatedly performing the processing from steps S202 through S506.

As described above, the power measuring apparatus 42 according to the present embodiment can change the frequency of transmitting the power information according to the power change rate, that is, according to the size of influence on the total power consumption level. Accordingly, the power information collecting apparatus having power information transmitted from the power measuring apparatus can efficiently collect the power information of a device 13 having a larger influence on the total power consumption level by giving priority to the device.

Thus far, the power information collecting apparatus, the power measuring apparatus, and so on according to the present invention have been described based on embodiments, but the present invention is not limited to these embodiments. Those skilled in the art will readily appreciate that many modifications are possible in the exemplary embodiments without materially departing from the novel teachings and advantages of this invention. Accordingly, all such modifications are intended to be included within the scope of this invention.

For example, in the first to third embodiments described above, the power information has been described as including information indicating the power consumption level, but the power information may include the power change rate. If this is the case, the power measuring apparatus may include the change rate calculating unit, and the power information collecting apparatus need not include the change rate calculating unit.

In addition, in the first to third embodiments described above, the power change rate has been described as indicating the degree of increase in the power consumption level, but it is preferable that the power change rate indicate the degree of increase and decrease of the power consumption level. Specifically, it is preferable that the power change rate P be calculated as shown in Expression (3) below.

[Math 3]

$$P = \left| \frac{W_1 - W_2}{T} \right| \qquad \cdots (3)$$

This allows the power information collecting apparatus to increase the frequency of collecting the power information of a device having a significant decrease in the power consumption level. Accordingly, the power information collecting apparatus can quickly detect a change in the total power consumption level. As a result, for example, in controlling the power consumption of the device to suppress the power consumption so as not to exceed the maximum usable power level, this allows the power information collecting apparatus to perform control according to the change in the total power consumption level. For example, when the operation of one device is stopped in order to suppress the increase in the total power consumption level, the power information collecting apparatus can quickly detect the change in the power consumption level of the device. Accordingly, the power information collecting apparatus is allowed to appropriately determine whether or not it is further necessary to stop yet another device.

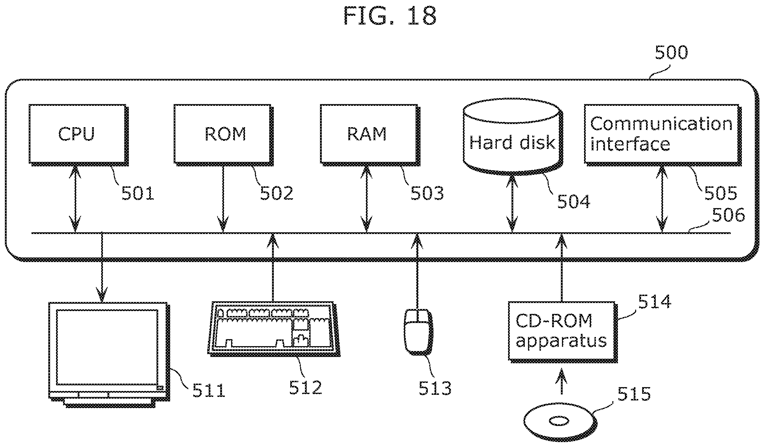

Note that the present invention can also be realized as a power information collecting method for executing the processing to be performed by a characteristic constituent element of such a power information collecting apparatus. In addition, the present invention can also be realized as a program for causing a computer to execute the power information collecting method as shown in Fig. 18. Moreover, such a program can be distributed via a recording medium such as a compact disc read only memory (CD-ROM) or a transmission medium such as the Internet.

Fig. 18 is a diagram showing an example of a hardware configuration of the computer. The program for causing the computer to execute the power information collecting method is, for example, recorded on a CD-ROM 515 that is a computer-readable medium, and is read via a CD-ROM apparatus 514. In addition, the program for causing the computer to execute the power information collecting method is transmitted via a wired or wireless network, broadcasting, or the like.

A computer 500 includes: a central processing unit (CPU) 501; a read only memory (ROM) 502, a random access memory (RAM) 503, a hard disk 504, and a communication interface 505.

The CPU 501 executes a program that is read via the CD-ROM apparatus 514 or received via the communication interface 505. Specifically, the CPU 501 expands, in the RAM 503, the program that is read via the CD-ROM apparatus 514 or received via the communication interface 505. Then, the CPU 501 executes each coded instruction in the program that is expanded in the RAM 503.

The ROM 502 is a read only memory for storing a program or data necessary for the computer 500 to operate. The RAM 503 is used as a work area for the CPU 501 to execute the program. Specifically, the RAM 503, for example, temporarily stores the data such as a parameter for executing the program. The hard disk 504 stores the program, the data, and so on.

The communication interface 505 communicates with another computer via the network. The bus 506 mutually connects: the CPU 501, the ROM 502, the RAM 503, the hard disk 504, the communication interface 505, a display 511, a keyboard 512, a mouse 513, and the CD-ROM apparatus 514.

Furthermore, the present invention can also be realized as a large scale integration (LSI) that realizes part or all of the function of such a power information collecting apparatus or power measuring apparatus. Specifically, the present invention can be realized as an integrated circuit which includes, for example, part or all of the constituent elements shown in each of Figs. 2, 9, 14, and 16.

In addition, the integrated circuit may be individually configured into one chip or may be configured into one chip to include part or all the constituent elements.

In addition, the circuit integration is not limited to the LSI, but may be realized by a dedicated circuit or a general-purpose processor. After manufacturing the LSI, a field programmable gate array (FPGA) that allows programming or a reconfigurable processor for which connections of circuit cells and settings within the LSI are reconfigurable may be used.

Furthermore, when another integrated circuit technology appears to replace the LSI as a result of development of the semiconductor technology or due to some derivative technique, the function blocks may naturally be integrated using the technology.

[Industrial Applicability]

The present invention is applicable as a power information collecting apparatus which collects power information including a power consumption level of each of a plurality of devices, a device controller including the power information collecting apparatus, or the like.

[Reference Signs List]

11, 21, 31 Power information collecting apparatus
12, 12a, 12b, 12c, 12d, 42 Power measuring apparatus
13 Device
111, 121 Data holding unit
112, 425 Change rate calculating unit
113, 123 Communication unit
114, 124, 214, 314, 424 Controller
122 Power measuring unit

**Claims**

1. A power information collecting apparatus (11) which is configured to collect, for each of a plurality of devices (13), power information including a power consumption level, said power information collecting apparatus comprising:

   - a communication unit (113) that collects the power information for each of the devices (13);
   - a memory (111) that holds the power information collected by said communication unit (113);
   - a calculating unit (112) that calculates a power change rate for each of the devices (13), using the power information held by said memory (111), the power change rate indicating a degree of increase and decrease in the power consumption level;

   **characterized in that** the power information collecting apparatus (11) comprises a controller (114) that is configured to control said communication unit (113) to set a higher frequency of collecting the power information of the device having a larger influence on the total power consumption level than the collection frequencies of the other devices, wherein the collecting rate is set higher for individual devices having a higher power change rate than for individual devices having a lower power change rate.

2. The power information collecting apparatus (11) according to claim 1, wherein said calculating unit (112) is configured to calculate the power change rate for each of the devices (13), using last collected power information out of the power information held by said memory (111).

3. The power information collecting apparatus (11) according to claim 1, wherein said calculating unit (112) is configured to calculate, for each of the devices (13), a maximum power change rate as the power change rate, the maximum power change rate being a highest power change rate among power change rates for a plurality of periods.

4. The power information collecting apparatus (11) according to claim 1, wherein said calculating unit (112) is configured to calculate, for each of the devices (13), an average power change rate as the power change rate, the average power change rate being an average of power change rates for a plurality of periods.

5. The power information collecting apparatus (11) according to one of claims 1 to 4, wherein said controller (114) is configured to determine whether or not a total power consumption level that is a total of power consumption levels of the devices (13) exceeds a first threshold, and to control, when the total power consumption level exceeds the first threshold, said communication unit (113) to set the higher frequency of collecting the power information of the device having a larger influence on the total power consumption level than the collection frequencies of the other devices.

6. The power information collecting apparatus (11) according to claim 5, wherein the first threshold is a value calculated by subtracting, from a maximum usable power level indicating an upper limit of the total power consumption level that is usable, a product of a maximum power change rate that is highest among the maximum power change rates of the devices (13) and a predetermined time interval, and the maximum power change rate is a highest power change rate among power change rates for a plurality of periods.

7. The power information collecting apparatus (11) according to one of claims 5 and 6, wherein said controller (114) is configured to control said communication unit (113) such that said communication unit (113) does not collect power information of a device having a maximum power change rate smaller than a second threshold, when the total power consumption level exceeds the first threshold.

8. The power information collecting apparatus (11) according to one of claims 1 to 7, wherein said controller (114) is further configured to control the devices (13), using the power information collected by said communication unit (113).

9. A power information collecting system (31) comprising:

   - a power information collecting apparatus (12) according to claim 1,

   wherein said power measuring apparatus includes:

   - a second power measuring unit (122) that is configured to measure a power consumption level of the at least one of the devices (13) to which said second power measuring unit (122) is connected;

- a second memory (111) that is configured to hold the power information including the power consumption level measured by said power measuring unit (122); and
- a second communication unit (113) that is configured to transmit, to said power information collecting apparatus, the power information held by said second memory (111).

10. A power information collecting method for collecting, for each of a plurality of devices (13), power information including a power consumption level, said power information collecting method comprising:

- collecting the power information for each of the devices (13);
- holding the power information collected in said collecting;
- calculating a power change rate for each of the devices (13), using the power information held, in said holding, the power change rate indicating a degree of increase and decrease in the power consumption level;

**characterized in that** the power information collecting method comprises a performing control to set a higher frequency of collecting the power information of the device having a larger influence on the total power consumption level than the collection frequencies of the other devices, wherein the collecting rate is set higher for individual devices having a higher power change rate than for individual devices having a lower power change rate.

**Patentansprüche**

1. Leistungsinformations-Sammelvorrichtung (11), konfiguriert zum Sammeln, für jedes von mehreren Geräten (13), von Leistungsinformation einschließlich eines Leistungsverbrauchspegels, wobei die Leistungsinformations-Sammelvorrichtung umfasst:

- eine Kommunikationseinheit (113), die die Leistungsinformation für jedes der Geräte (13) sammelt;
- einen Speicher (111), der die von der Kommunikationseinheit (113) gesammelte Leistungsinformation enthält;
- eine Berechnungseinheit (112), die eine Leistungsänderungsrate für jedes der Geräte (13) unter Verwenden der vom Speicher (111) gehaltenen Leistungsinformation berechnet, wobei die Leistungsänderungsrate einen Grad der Zunahme und Abnahme des Leistungsverbrauchspegels angibt;

**dadurch gekennzeichnet, dass** die Leistungsinformations-Sammelvorrichtung (11) eine Steuerung (114) umfasst, die konfiguriert ist zum Steuern der Kommunikationseinheit (113) zum Einstellen einer höheren Frequenz des Sammelns der Leistungsinformation des Geräts, das einen größeren Einfluss auf den Gesamtleistungsverbrauchspegel hat als die Sammlungsfrequenzen der anderen Geräte, wobei die Sammelrate für individuelle Geräte, die eine höhere Leistungsänderungsrate haben, höher festgelegt wird, als für individuelle Geräte, die eine niedrigere Leistungsänderungsrate haben.

2. Leistungsinformations-Sammelvorrichtung (11) nach Anspruch 1, wobei die Berechnungseinheit (112) konfiguriert ist zum Berechnen der Leistungsänderungsrate für jedes der Geräte (13) unter Verwenden der zuletzt gesammelten Leistungsinformation aus der von dem Speicher (111) gehaltenen Leistungsinformation.

3. Leistungsinformations-Sammelvorrichtung (11) nach Anspruch 1, wobei die Berechnungseinheit (112) konfiguriert ist zum Berechnen, für jedes der Geräte (13), einer maximalen Leistungsänderungsrate als die Leistungsänderungsrate, wobei die maximale Leistungsänderungsrate eine höchste Leistungsänderungsrate unter Leistungsänderungsraten für mehrere Perioden ist.

4. Leistungsinformations-Sammelvorrichtung (11) nach Anspruch 1, wobei die Berechnungseinheit (112) konfiguriert ist zum Berechnen, für jedes der Geräte (13), einer mittleren Leistungsänderungsrate als die Leistungsänderungsrate, wobei die mittlere Leistungsänderungsrate eine mittlere Leistungsänderungsrate für mehrere Perioden ist.

5. Leistungsinformations-Sammelvorrichtung (11) nach einem der Ansprüche 1 bis 4, wobei die Steuerung (114) konfiguriert ist zum Bestimmen, ob ein Gesamtleistungsverbrauchspegel, der eine Summe von Gesamtleistungsverbrauchspegeln der Geräte (13) ist, einen ersten Schwellenwert überschreitet oder nicht, und zum Steuern, wenn der Gesamtleistungsverbrauchspegel den ersten Schwellenwert überschreitet, der Kommunikationseinheit (113) zum Einstellen der höheren Frequenz des Sammelns der Leistungsinformation des Geräts, das einen größeren Einfluss auf den Gesamtleistungsverbrauchspegel hat als die Sammlungsfrequenzen der anderen Geräte.

6. Leistungsinformations-Sammelvorrichtung (11) nach Anspruch 5, wobei der erste Schwellenwert ein Wert ist, der berechnet wird durch Subtrahieren, von einem maximalen nutzbaren Leistungspegel, der eine obere Grenze des nutzbaren Gesamtverbrauchsniveaus angibt, eines Produkts von einer maximalen Leistungsänderungsrate, die die höchste unter den maximalen Leistungsänderungsraten der Geräte (13) ist, und einem im Voraus bestimmten Zeitintervall, und die maximale Leistungsänderungsrate eine höchste Leistungsänderungsrate unter Leistungsänderungsraten für mehrere Perioden ist.

7. Leistungsinformations-Sammelvorrichtung (11) nach einem der Ansprüche 5 und 6, wobei die Steuerung (114) konfiguriert ist zum Steuern der Kommunikationseinheit (113) derart, dass die Kommunikationseinheit (113) keine Leistungsinformation eines Geräts sammelt, das eine maximale Leistungsänderungsrate aufweist, die kleiner als ein zweiter Schwellenwert ist, wenn der Gesamtleistungsverbrauchspegel den ersten Schwellenwert überschreitet.

8. Leistungsinformations-Sammelvorrichtung (11) nach einem der Ansprüche 1 bis 7, wobei die Steuerung (114) ferner konfiguriert ist zum Steuern der Geräte (13) unter Verwenden der von der Kommunikationseinheit (113) gesammelten Leistungsinformation.

9. Leistungsinformations-Sammelsystem (31) umfassend:

    - eine Leistungsinformations-Sammelvorrichtung (12) nach Anspruch 1,

wobei die Leistungsmessvorrichtung umfasst:

    - eine zweite Leistungsmesseinheit (122), die konfiguriert ist zum Messen eines Leistungsverbrauchspegels des mindestens einen der Geräte (13), mit der die zweite Leistungsmesseinheit (122) verbunden ist;
    - einen zweiten Speicher (111), der konfiguriert ist zum Halten der von der Leistungsmesseinheit (122) gemessenen Leistungsinformation einschließlich des Leistungsverbrauchspegels; und
    - eine zweite Kommunikationseinheit (113), die konfiguriert ist zum Übertragen, an die Leistungsinformations-Sammelvorrichtung, der vom zweiten Speicher (111) gehaltenen Leistungsinformation.

10. Leistungsinformations-Sammelverfahren zum Sammeln, für jedes von mehreren Geräten (13), von Leistungsinformation einschließlich eines Leistungsverbrauchspegels, wobei das Leistungsinformations-Sammelverfahren umfasst:

    - Sammeln der Leistungsinformation für jedes der Geräte (13);

    - Halten der beim Sammeln gesammelten Leistungsinformation;
    - Berechnen einer Leistungsänderungsrate für jedes der Geräte (13), unter Verwenden der im Halten gehaltenen Leistungsinformation, der Leistungsänderungsrate, die einen Grad der Zunahme und Abnahme des Leistungsverbrauchspegels angibt;

**dadurch gekennzeichnet, dass** das Leistungsinformations-Sammelverfahren eine Kontrolle der Ausführung umfasst, um eine höhere Frequenz des Sammelns der Leistungsinformation des Geräts, das einen größeren Einfluss auf den Gesamtleistungsverbrauchspegel hat, einzustellen, als die Sammlungsfrequenzen der anderen Geräte, wobei die Sammelrate für individuelle Geräte, die eine höhere Leistungsänderungsrate haben, höher festgelegt wird, als für individuelle Geräte, die eine niedrigere Leistungsänderungsrate haben.

## Revendications

1. Appareil de collecte d'informations de puissance (11) qui est configuré pour collecter, pour chacun d'une pluralité de dispositifs (13), des informations de puissance qui comprennent un niveau de consommation d'énergie, ledit appareil de collecte d'informations de puissance comprenant :

    - une unité de communication (113) qui collecte les informations de puissance pour chacun des dispositifs (13) ;
    - une mémoire (111) qui conserve les informations de puissance collectées par ladite unité de communication (113) ;
    - une unité de calcul (112) qui calcule un taux de variation de puissance pour chacun des dispositifs (13), en utilisant les informations de puissance conservées par ladite mémoire (111), le taux de variation de puissance indiquant un degré d'augmentation et de diminution du niveau de consommation d'énergie ;

**caractérisé en ce que** l'appareil de collecte d'informations de puissance (11) comprend un contrôleur (114) qui est configuré pour commander ladite unité de communication (113) pour établir une fréquence de collecte des informations de puissance du dispositif ayant une plus grande influence sur le niveau de consommation d'énergie total plus élevée que les fréquences de collecte des autres dispositifs, dans lequel le taux de collecte est fixé à une valeur plus élevée pour les dispositifs individuels ayant un taux de variation de puissance plus élevé que pour les dispositifs individuels ayant un taux de variation de puissance plus faible.

**2.** Appareil de collecte d'informations de puissance (11) selon la revendication 1, dans lequel ladite unité de calcul (112) est configurée pour calculer le taux de variation de puissance pour chacun des dispositifs (13), en utilisant les dernières informations de puissance collectées parmi les informations de puissance conservées par ladite mémoire (111).

**3.** Appareil de collecte d'informations de puissance (11) selon la revendication 1, dans lequel ladite unité de calcul (112) est configurée pour calculer, pour chacun des dispositifs (13), un taux de variation de puissance maximum en tant que taux de variation de puissance, le taux de variation de puissance maximum étant un taux de variation de puissance le plus élevé parmi les taux de variation de puissance pour une pluralité de périodes.

**4.** Appareil de collecte d'informations de puissance (11) selon la revendication 1, dans lequel ladite unité de calcul (112) est configurée pour calculer, pour chacun des dispositifs (13), un taux de variation de puissance moyen en tant que taux de variation de puissance, le taux de variation de puissance moyen étant une moyenne des taux de variation de puissance pour une pluralité de périodes.

**5.** Appareil de collecte d'informations de puissance (11) selon l'une des revendications 1 à 4, dans lequel ledit contrôleur (114) est configuré pour déterminer si, oui ou non, un niveau de consommation d'énergie total qui est un total des niveaux de consommation d'énergie des dispositifs (13) dépasse un premier seuil, et pour commander, lorsque le niveau de consommation d'énergie total dépasse le premier seuil, ladite unité de communication (113) pour établir la fréquence plus élevée de collecte des informations de puissance du dispositif ayant une plus grande influence sur le niveau de consommation d'énergie total que les fréquences de collecte des autres dispositifs.

**6.** Appareil de collecte d'informations de puissance (11) selon la revendication 5, dans lequel le premier seuil est une valeur calculée en soustrayant, d'un niveau de puissance utilisable maximum qui indique une limite supérieure du niveau de consommation d'énergie total qui est utilisable, un produit d'un taux de variation de puissance maximum qui est le plus élevé parmi les taux de variation de puissance maximums des dispositifs (13) et d'un intervalle de temps prédéterminé, et le taux de variation de puissance maximum est un taux de variation de puissance le plus élevé parmi les taux de variation de puissance pour une pluralité de périodes.

**7.** Appareil de collecte d'informations de puissance (11) selon l'une des revendications 5 et 6, dans lequel ledit contrôleur (114) est configuré pour commander ladite unité de communication (113) de sorte que ladite unité de communication (113) ne collecte pas les informations de puissance d'un dispositif ayant un taux de variation de puissance maximum inférieur à un deuxième seuil, lorsque le niveau de consommation d'énergie total dépasse le premier seuil.

**8.** Appareil de collecte d'informations de puissance (11) selon l'une des revendications 1 à 7, dans lequel ledit contrôleur (114) est en outre configuré pour commander les dispositifs (13), en utilisant les informations de puissance collectées par ladite unité de communication (113).

**9.** Système de collecte d'informations de puissance (31) comprenant :

- un appareil de collecte d'informations de puissance (12) selon la revendication 1,

dans lequel ledit appareil de mesure de puissance comprend :

- une deuxième unité de mesure de puissance (122) qui est configurée pour mesurer un niveau de consommation d'énergie dudit au moins un des dispositifs (13) auquel ladite deuxième unité de mesure de puissance (122) est connectée ;
- une deuxième mémoire (111) qui est configurée pour conserver les informations de puissance qui comprennent le niveau de consommation d'énergie mesuré par ladite unité de mesure de puissance (122) ; et
- une deuxième unité de communication (113) qui est configurée pour transmettre, audit appareil de collecte d'informations de puissance, les informations de puissance conservées par ladite deuxième mémoire (111).

**10.** Procédé de collecte d'informations de puissance pour collecter, pour chacun d'une pluralité de dispositifs (13), des informations de puissance qui comprennent un niveau de consommation d'énergie, ledit procédé de collecte d'informations de puissance comprenant :

- la collecte des informations de puissance pour chacun des dispositifs (13) ;
- la conservation des informations de puissance collectées lors de ladite collecte ;
- le calcul d'un taux de variation de puissance pour chacun des dispositifs (13), en utilisant les informations de puissance conservées, lors de ladite conservation, dans lequel le taux de variation de puissance indique un degré d'augmentation et de diminution du niveau de consommation d'énergie ;

**caractérisé en ce que** le procédé de collecte d'informations de puissance comprend l'exécution d'une commande pour établir une fréquence de collecte des informations de puissance du dispositif ayant une plus grande influence sur le niveau de consommation d'énergie total plus élevée que les fréquences de collecte des autres dispositifs, dans lequel le taux de collecte est fixé à une valeur plus élevée pour les dispositifs individuels ayant un taux de variation de puissance plus élevé que pour les dispositifs individuels ayant un taux de variation de puissance plus faible.

FIG. 1

# FIG. 2

# FIG. 3

Power measuring apparatus — 12

| Power measuring unit — 122 | Data holding unit — 121 | Communication unit — 123 |

Controller — 124

## FIG. 4

```
        ┌─────────┐
        │  Start  │
        └────┬────┘
             ▼
   ┌──────────────────────┐
   │ Receive power information │──── S102
   └──────────┬───────────┘
              ▼
   ┌──────────────────────┐
   │  Hold power information  │──── S104
   └──────────┬───────────┘
              ▼
   ┌──────────────────────┐
   │ Calculate power change rate │──── S106
   └──────────┬───────────┘
              ▼
   ┌──────────────────────┐
   │   Determine frequency of    │──── S108
   │  receiving power information │
   └──────────┬───────────┘
              ▼
   ┌──────────────────────┐
   │    Transmit command      │──── S110
   └──────────────────────┘
```

## FIG. 5

```
        ┌─────────┐
        │  Start  │
        └────┬────┘
             ▼
   ┌──────────────────────────┐
   │ Measure power consumption level │──── S202
   └────────────┬─────────────┘
                ▼
   ┌──────────────────────────┐
   │     Hold power information     │──── S204
   └────────────┬─────────────┘
                ▼
              ◇ Determine ◇     No
              ◇ transmission ◇ ────────►
                ┃ Yes                   S206
                ▼
   ┌──────────────────────────┐
   │   Transmit power information   │──── S208
   └──────────────────────────┘
```

# FIG. 6

# FIG. 7

# FIG. 8

FIG. 9

# FIG. 10

# FIG. 11

```
        ┌─────────┐
        │  Start  │
        └─────────┘
             │
             ▼
┌──────────────────────────────┐
│   Receive power information   │──── S102
└──────────────────────────────┘
             │
             ▼
┌──────────────────────────────┐
│    Hold power information     │──── S104
└──────────────────────────────┘
             │
             ▼
┌──────────────────────────────┐
│  Calculate power change rate  │──── S106
└──────────────────────────────┘
             │
             ▼
┌──────────────────────────────┐
│ Obtain total power consumption level │──── S302
└──────────────────────────────┘
             │
             ▼
┌──────────────────────────────┐
│    Calculate first threshold   │──── S304
└──────────────────────────────┘
             │
             ▼
          ◇ S306
    Total power
    consumption level >        No
    first threshold?     ──────────►
             │
            Yes
             ▼
┌──────────────────────────────┐
│      Determine frequency of    │──── S108
│     receiving power information │
└──────────────────────────────┘
             │
             ▼
┌──────────────────────────────┐
│       Transmit command         │──── S110
└──────────────────────────────┘
```

## FIG. 12A

| 21 | 12a | 12b | 12c | 12d |
|---|---|---|---|---|
| Power information collecting apparatus | First power measuring apparatus | Second power measuring apparatus | Third power measuring apparatus | Fourth power measuring apparatus |

Power information request command

Power information
Power information request command

Power information
Power information request command

Power information
Power information request command

Power information

α

Power information request command

Power information
Power information request command

Power information
Power information request command

Power information
Power information request command

Power information
Power information request command

Power information

Power information request command

Power information

⋮

29

# FIG. 12B

# FIG. 13

FIG. 14

# FIG. 15

Start

Receive power information —S102

Hold power information —S104

Calculate power change rate —S106

Determine frequency of receiving power information —S108

Transmit command —S110

S402

Power control is necessary? —No→

Yes

Transmit power control command —S404

FIG. 16

Power measuring apparatus 42

Power measuring unit 122 → Data holding unit 121

Communication unit 123

Change rate calculating unit 425 → Controller 424

# FIG. 17

```
           ┌──────────┐
           │  Start   │
           └────┬─────┘
                │ ◄──────────────────────┐
                ▼                         │
  ┌─────────────────────────────────┐    │
  │ Measure power consumption level │─ S202
  └────────────────┬────────────────┘    │
                   ▼                      │
  ┌─────────────────────────────────┐    │
  │     Hold power information       │─ S204
  └────────────────┬────────────────┘    │
                   ▼                      │
  ┌─────────────────────────────────┐    │
  │   Calculate power change rate    │─ S502
  └────────────────┬────────────────┘    │
                   ▼                      │
  ┌─────────────────────────────────┐    │
  │      Determine frequency of      │─ S504
  │   transmitting power information │    │
  └────────────────┬────────────────┘    │
                   ▼                      │
  ┌─────────────────────────────────┐    │
  │    Transmit power information    │─ S506
  └────────────────┬────────────────┘    │
                   └──────────────────────┘
```

## FIG. 18

EP 2 511 715 B1

FIG. 19

EP 2 511 715 B1

**EP 2 511 715 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004023283 A

- CA 2542193 A1